# EUROPEAN PATENT APPLICATION

(11) **EP 4 656 611 A1**
(43) Date of publication of application: **03.12.2025**
(21) Application number: 24178629.2
(22) Date of filing: 28.05.2024
(51) Int. Cl.: C04B 28/08, C04B 28/16

(54) **INORGANIC BINDER COMPOSITION COMPRISING LADLE FURNACE SLAG**

(71) Applicant: ResourceFull BV, 3000 Leuven (BE)
(72) Inventor: DIQUELOU, Youen, B-4000 Liège (BE); ARNOUT, Lukas, B-3010 Kessel-Lo (BE); LAPAUW, Thomas, B-3010 Kessel-Lo (BE)
(74) Representative: IPLodge bv

(57) **Abstract**

The present invention suggests an inorganic binder composition, comprising calcinated ladle furnace slag, a retarder and a CaSO₄-scource, wherein a ladle furnace slag having a loss-on-ignition value of at least 1 wt%, preferably at least 3 wt%, more preferably at least 5 wt%, and even more preferably at least 7 wt%, was calcinated by heating it to a temperature between 250°C and 1000°C until the loss-on-ignition value was reduced by at least 0.5 wt%, preferably at least 2.5 wt%, more preferably at least 4.5 wt%, and even more preferably at least 6.5 wt%.

Moreover, the present invention suggests a process for producing said inorganic binder composition, comprising the steps of providing a ladle furnace slag having a loss-on-ignition value of at least 1 wt%, preferably at least 3 wt%, more preferably at least 5 wt%, and even more preferably at least 7 wt%, calcinating the ladle furnace slag by heating it to a temperature between 250°C and 1000°C until the loss-on-ignition value is reduced by least 0.5 wt%, preferably at least 2.5 wt%, more preferably at least 4.5 wt%, and even more preferably at least 6.5 wt%, combining and homogeneously mixing the calcinated ladle furnace slag with a retarder and a CaSO₄-scource to form the inorganic binder composition.

Finally, the present invention suggests the use of said inorganic binder composition, comprising combining the binder composition with water and optionally aggregates to form a building product.

## Description

### Technical Field

The present invention relates to an inorganic binder composition comprising calcinated ladle furnace slag, a retarder and a CaSO₄-scource. Moreover, the present invention relates to a process for producing that binder composition and also to the use thereof for forming a building product.

### Background Art

The use of CaO-Al₂O₃ phases (calcium aluminate phases, 'CA') as cement constituent is known in the state of the art and there is a wide range of commercial products available on the market. One of the typical features of these CA cement types is the fact that, when mixed with water, they can result in a fast setting and hardening binder, resulting in a high production speed and a high economic value.

The production of CA cement is done at high temperatures, usually above 1300°C, and it often involves the melting of the compounds.

The combination of CA cement with CaSO₄-based compounds is also often used for applications where low or no shrinkage is required. The proper dosage of the CA cement and CaSO₄-based compounds is used for applications where no shrinkage is tolerated and prevents the need for i.e. extra reinforcement or shrinkage joints.

The use of CA-rich residues such as ladle slag in cementitious systems has been widely reported and suggested in literature, as described for example in WO 2020141379 A1. With reference to ES 2891675 B2, it is clear that ladle furnace slags can have hydraulic properties which provide a certain mechanical strength and can be combined with ordinary Portland cement (OPC) and some blast furnace slag. However, the challenge is to form a durable and robust binder without loss in strength after a certain period of time [Cement and Concrete Research 41 (2011) 865-571].

The combination of ladle furnace slag with activators has been explored in order to overcome this issue. The use of alkali-activators showed an improvement in strength [Construction and Building Materials 123 (2016) 800-805]. The use of ladle furnace slag in combination with CaSO₄ has been documented [Construction and Building Materials 197 (2019) 143-151; Construction and Building Materials 127 (2016) 93-101]. This can result in a more durable binder based on ettringite. However, the challenge lies in the limitations imposed by the reactivity and quality of the residue. This issue is addressed in this invention.

A heat-treatment step (calcination step) prior to the incorporation of the ladle furnace slag into a hydraulic binder system containing an activator and set-regulator is carried out.

Another challenge, less reported, is the dimensional stability of the formed building product. Severe shrinkage due to the absence of anions such as SO₄²⁻ is detrimental for the usage of binders based on this type of slag. On the other hand, the dosage should be tuned to amount of reactive CA-phases otherwise uncontrollable expansion can occur [Construction and Building Materials 127 (2016) 93-101].

Also, the use of alumina-containing waste as raw material for Portland clinker or for calcium aluminate cement has been studied, as disclosed in RU 2347764 C2. The thermal treatments however require a high temperature step at which part of the minerals are molten and can transformed into the desired cementitious species. These high temperatures require a high energy input and are environmentally unfavorable compared to a lower temperature calcination step according to the present invention.

Furthermore, the use of CA-rich binders has been reported as binder component in alkali-activated materials, as described in EP 4174045 A1. The use in combination with CaSO₄ as an activator has however explicitly been mentioned as not useful due to the potential risk of 'undesirable expansion'. In this invention a method is presented which lowers this risk and facilitates the usage of CaSO₄.

'Steel Slag' coming from the convertor process can also be used as a precursor for inorganic binders. Several documents describe possible compositions or treatments i.e. EP 4276084 A1. Ladle furnace slag used in this invention clearly differs from the common 'Steel slag' aka convertor slag in terms of chemistry and mineralogy. In particular, the convertor slags' chemistry has a lower Al₂O₃-content which results in the absences of any Ca-Al rich phases.

### Problem statement

Due to the large size of steel batches, ladle furnace slag is poured out on the ground and allowed to cool down in the open. This results in substantial water and CO₂ uptake by the slag. Very good samples of ladle furnace slag have been found to possess a loss-on-ignition value (as will be defined later) of at least 1 wt% to at least 3 wt%, average samples have a loss-on-ignition value of at least 5 wt%, and bad samples have a loss-on-ignition value of at least 7 wt%, let alone ladle furnace slag that has been recovered from landfills. These loss-on-ignition values correspond to very low hydraulic activities of the respective slags. It was the objective of the present invention to overcome these shortcomings.

Moreover, it was another objective to provide an inexpensive substitute for the CA cements known in the state of the art, the utility thereof being limited due to the high costs that are associated with purity of the raw materials, the high Al₂O₃-content, higher production costs and very high production temperatures (>1300°C), resulting in a high ecological footprint of the final material.

Finally, as mentioned above, the consistency of quality and reactivity of the ladle furnace slag of the prior art is insufficient to produce high quality binders.

### Summary of the invention

The above-mentioned problems are solved with the features of the independent claims. The dependent claims pertain to preferred embodiments of the invention.

According to a first aspect of the invention, an inorganic binder composition is provided comprising calcinated ladle furnace slag, a retarder and a CaSO₄-scource, wherein a ladle furnace slag having a loss-on-ignition value of at least 1 wt%, preferably at least 3 wt%, more preferably at least 5 wt%, and even more preferably at least 7 wt%, was calcinated by heating it to a temperature between 250°C and 1000°C until the loss-on-ignition value was reduced by at least 0.5 wt%, preferably at least 2.5 wt%, more preferably at least 4.5 wt%, and even more preferably at least 6.5 wt%.

According to a second aspect, a process for producing the binder composition of the invention is provided, comprising the steps of providing a ladle furnace slag having a loss-on-ignition value of at least 1 wt%, preferably at least 3 wt%, more preferably at least 5 wt%, and even more preferably at least 7 wt%, calcinating the ladle furnace slag by heating it to a temperature between 250°C and 1000°C until the loss-on-ignition value is reduced by least 0.5 wt%, preferably at least 2.5 wt%, more preferably at least 4.5 wt%, and even more preferably at least 6.5 wt%, combining and homogeneously mixing the calcinated ladle furnace slag with a retarder and a CaSO₄-scource to form the inorganic binder composition.

Finally, according to a third aspect, the present invention provides for the use of the inorganic binder composition of the invention, comprising combining the binder composition with water and optionally aggregates to form a building product.

The present disclosure solves the aforementioned technical problems as it describes the use of a ladle slag, containing phases similar to the ones as present in CA cement. In particular, such residues are at least partially crystalline and chemically contain a fraction of CaO and Al₂O₃.

Advantageously, as CA-rich residues (CARR) such as ladle furnace slag are currently used in low value applications, the overall cost of cement production would be reduced.

Still advantageously, there is no need to perform a heat treatment at such high temperatures, thus the ecological footprint of the final material is reduced.

### Brief Description of the Drawings

Various technical effects and advantages of embodiments of the present invention will now be described with reference to the accompanying figures, in which:
- Figure 1 illustrates the temperature increase measured during calorimetry of inorganic binder compositions,
- Figure 2 illustrates compressive strength values of the inorganic binder compositions after heat treatment at different temperatures,
- Figure 3 illustrates the dimensional stability under water of a binder composition,
- Figure 4 illustrates the compressive strength values of inorganic binder compositions in which various ladle furnace slags are used,
- Figure 5 illustrates the compressive strength values of another inorganic binder composition based on the same type of ladle furnace slag, before and after the heat-treatment,
- Figure 6 illustrates the compressive strength values of different inorganic binder compositions, after the same heat treatment.

### Detailed description of the invention

The present invention will be described with respect to particular embodiments and with reference to certain drawings, but the invention is not limited thereto but only by the claims.

Furthermore, while some embodiments described herein include some, but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

For the purposes of the invention, the term "comprising" is intended to include the narrower term "consisting of", but not to be synonymous therewith. It is moreover intended that the sum of the percentages of the specified constituents of the composition of the invention is always 100% or can be adjusted to 100% in case of small experimental errors.

For the purpose of the invention, "CA" refers to CaO-Al₂O₃ phases (i.e. calcium aluminate-containing phases).

For the purpose of the invention, the term "residue" refers to ladle furnace slag.

For the purpose of the invention, the term "d_50" refers herein to a mass-median-diameter, considered to be the average particle size by mass d_50 may be measured by experimental techniques such as laser diffraction.

For the purpose of the invention, the term "loss-on-ignition" refers herein to the process of measuring the weight change of a dry sample after it has been heated to 950°C and cooled down in a desiccator over a drying agent, these steps being repeated until a constant weight is achieved, thus causing some of its content to burn or to volatilize.

As mentioned above, according to a first aspect of the invention an inorganic binder composition is provided comprising calcinated ladle furnace slag, a retarder and a CaSO₄-scource, wherein a ladle furnace slag having a loss-on-ignition value of at least 1 wt%, preferably at least 3 wt%, more preferably at least 5 wt%, and even more preferably at least 7 wt%, was calcinated by heating it to a temperature between 250°C and 1000°C until the loss-on-ignition value was reduced by at least 0.5 wt%, preferably at least 2.5 wt%, more preferably at least 4.5 wt%, and even more preferably at least 6.5 wt%.

Of course, the constituents of the inorganic binder composition of the invention may be held available in separate portions, i.e. as a kit of parts. It is possible to store the calcinated ladle furnace slag separately from the CaSO₄-source and the retarder, the latter ones being present separately or combined. Moreover, it is possible to store a mixture of the calcinated ladle furnace slag with the CaSO₄-source or the retarder and store the third part of the composition separately. All parts can be combined before use.

Due to the low quality and high variability of available ladle furnace slag of the prior art, as set out in the problem statement, it is much easier to describe the inorganic binder composition of the invention in terms of the process features leading to said composition. Still, there are pronounced differences between the calcinated ladle furnace slag and the inorganic binder composition containing the same as compared to available ladle furnace slag of the prior art and known binder compositions.

Firstly, the ladle furnace slag is calcinated. "Calcination" or "calcinated", as these terms are used throughout the specification, means that the ladle furnace slag is heated to a temperature between 250°C and 1000°C. Calcination is performed until the loss-on-ignition value is reduced by at least 0.5 wt%, preferably at least 2.5 wt%, more preferably at least 4.5 wt%, and even more preferably at least 6.5 wt%. The stating ladle furnace slag having a loss-on-ignition value of at least 1 wt%, preferably at least 3 wt%, more preferably at least 5 wt%, and even more preferably at least 7 wt%, the calcinated ladle furnace slag ideally and most preferably has a final loss-on-ignition value of less than 1 wt%.

Secondly and preferably, the ladle furnace slag after calcination comprises an amount of calcium aluminate phases compared to the non-calcinated ladle furnace slag that is increased by at least 5 wt%.

Thirdly, as will be shown in the experimental section, the hydraulic activity of the ladle furnace slag will substantially increase upon calcination. All this means that the inorganic binder composition of the invention comprising such ladle furnace slag is also different from known inorganic binder compositions.

The retarder is preferably selected from one or more of the following: Ca(OH)₂, CaO, a boron-containing salt, a carboxylic acid, a salt thereof, a sugar, a lignin sulfonate, an alkali carbonate, a phosphonate, a phosphate. Tartaric acid, citric acid, gluconic acid and salts thereof are particularly preferred.

The CaSO₄-source is preferably selected from one or more of the following: CaSO₄ (anhydrite), α-CaSO₄•½H₂O (a-hemihydrate), β-CaSO₄•½H₂O (β-hemihydrate), CaSO₄•2H₂O (gypsum), phosphogypsum, and SOa-scrubber gypsum.

The ratio between the calcinated ladle furnace slag and the CaSO₄-scource is preferably in the range from 19:1 to 1:3. Preferably, the minimum weight ratio between said calcinated ladle furnace slag and the CaSO₄-scource is 1:3, even more preferably 1:1. Preferably, the maximum weight ratio between said calcinated ladle furnace slag and the CaSO₄-scource is 19:1, more preferably 10:1, even more preferably 5:1.

Moreover, the ratio between the sum of the calcinated ladle furnace slag plus the CaSO₄-source, and the retarder is preferably larger than 19:1 (up to 10000:1).

Finally, the inorganic binder composition of the invention may further comprise metallurgical residues, non-ferrous metal slag, blast furnace slag, steel slag, additional non-calcinated ladle slag, clays, calcinated clays, glass beads, glass powder, and fillers such as ground limestone, dolomite and quartz. Accelerators, such as lithium-salts and alginates, may also be added. Furthermore, conserving additives, such as adipic acid, may be added.

In the following part of the description, slags in general and the term "residue" according to the present invention will be described.

An important aspect of the invention is the clear distinction between the various slags produced during iron- and steelmaking. All these slags have different chemistry and mineralogy and hence different hydraulic behavior. The different slags which are encountered are clearly described below:
- Primarily, in the first stage of iron and steel making, iron ore and cokes are processed in the blast furnace. In this stage pig iron is made and the slag produced during the blast furnace operations is known as blast furnace slag (BFS). Commonly, the BFS is granulated with water or air resulting in a significant amount of amorphous phases and little to no Ca-Al rich phases. Moreover, the chemistry of this slag is particularly rich in SiO₂-content. The use of milled granulated BFS as supplementary cementitious material (SCM) is well-known in the field.
- In a second step, the iron is converted into steel. This can be done during a convertor process such as Linz-Donawitz (LD) steelmaking process or Gilchrist-Thomas-converter process. The slag produced during this LD-process, convertor slag, also known as basic oxygen furnace (BOF) slag. The term 'Steel slag' in literature refers mostly to the slag produced during these processes. In particular the convertor slags' chemistry has a lower Al₂O₃-content which results in the absence of any Ca-Al rich phases, but a higher Fe-oxide content which results in the presence of Ca-Fe-phases.
- Thirdly, ladle slag or ladle furnace slag (LFS) is slag coming from secondary processes. It is one of the so-called secondary metallurgical slags (SMS), which are generated during the production and refinement of specific alloys such as high-quality steels and stainless steels by secondary metallurgical processes. The steel processed in e.g. basic oxygen furnaces (BOFs) and electric arc furnaces is treated in a ladle furnace to achieve the required chemical composition and temperatures appropriate for casting. For this purpose, different processes are applied, thus generating different types of slag. (Euroslag, 2019). Ladle slag or ladle furnace slag is produced during the production of, amongst other metals and alloys, steel and stainless steel. This slag has in comparison to the previous two slags a high Al₂O₃ content
- Other type of slag is produced during the operations of the electric arc furnace (EAF) which is used to melt steel scrap or direct reduced iron (DRI) can be produced during the steelmaking operations. Similarly, theses EAF slags' chemistry and mineralogy are different than the ladle slags used in this invention and therefore have a different reactivity.
- Another type of SMS is the slag produced during the Argon oxygen decarburization (AOD) process. This process is mainly used to purify stainless steel.

As mentioned above, the retarder is preferably selected from one or more of the following: a boron-containing salt, a carboxylic acid, a salt thereof, a sugar, a lignin sulfonate, an alkali carbonate, a phosphonate, a phosphate. Tartaric acid, citric acid, gluconic acid and salts thereof are particularly preferred. The CaSO₄-source is preferably selected from one or more of the following: CaSO₄ (anhydrite), αCaSO₄•½H₂O (αhemihydrate), β-CaSO₄•½H₂O (β-hemihydrate), CaSO₄•2H₂O (gypsum), phosphogypsum, and SOa-scrubber gypsum.

Finally, the inorganic binder composition of the invention may further comprise metallurgical residues, non-ferrous metal slag, blast furnace slag, steel slag, additional non-calcinated ladle slag, clays, calcinated clays, glass beads, glass powder, and fillers such as ground limestone, dolomite and quartz. Accelerators such as lithium-salts and alginates may also be added. Furthermore, conserving additives such as adipic acid may be added.

As mentioned above, the ladle furnace slag comprises, in terms of chemical composition, at least 25 wt% of CaO. Preferably, the ladle furnace slag comprises at least 30 wt% of CaO, more preferably at least 35 wt% of CaO. The ladle furnace slag comprises, in terms of chemical composition, at least 10 wt% of Al₂O₃. Preferably, the ladle furnace slag comprises at least 15 wt% of Al₂O₃, more preferably at least 20 wt%. Preferably, the combined fraction of CaO and Al₂O₃, in terms of chemical composition, is at least 40 wt%, preferably 50 wt%, even more preferably 60 wt%.

As mentioned above, according to a second aspect a process for producing the binder composition of the invention is provided, comprising the steps of providing a ladle furnace slag having a loss-on-ignition value of at least 1 wt%, preferably at least 3 wt%, more preferably at least 5 wt%, and even more preferably at least 7 wt%, calcinating the ladle furnace slag by heating it to a temperature between 250°C and 1000°C until the loss-on-ignition value is reduced by least 0.5 wt%, preferably at least 2.5 wt%, more preferably at least 4.5 wt%, and even more preferably at least 6.5 wt%, combining and homogeneously mixing the calcinated ladle furnace slag with a retarder and a CaSO₄-scource to form the inorganic binder composition.

"Homogeneously mixing", as this term is used herein, means that the standard deviation on the composition calculated on at least 10 randomly taken bulk samples of the inorganic binder composition is a maximum of 10% relative to the mean value. Samples that are not properly mixed tend to have undesired fresh properties and yield weak building products.

The ladle furnace slag preferably comprises at least one of the following mineral phases: 3CaO•Al₂O₃ (C3A), 12CaO•7Al₂O₃ (C12A7), CaO•Al₂O₃ (CA), CaO•2Al₂O₃ (CA2), and CaO•6Al₂O₃ (CA6). This holds true for the ladle furnace slag before and after calcination.

Moreover, the ladle furnace slag (before and after calcination) preferably comprises at least 25 wt% of CaO, at least 10 wt% of Al₂O₃, and a maximum of 25 wt% of SiO₂.

The ladle furnace slag may also comprise FezOs in the range from 1 wt% to 60 wt%, more preferably in the range from 5 wt% to 40 wt%. Preferably, the SiO₂-content is less than 20 wt%, even more preferably less than 15 wt%. Preferably, the combined fraction of CaO and Al₂O₃ is at least 40 wt%, even more preferably at least 50 wt%.

The weight ratio of Al₂O₃/CaO should be least 0.25. Preferably the weight ratio of Al₂O₃/CaO of the ladle furnace slag (before and after calcination) is in the range from 0.25 to 4, more preferably from 0.3 to 3, even more preferably from 0.4 to 2, still more preferably from 0.5 to 1.

Calcination preferably changes the amount of calcium aluminate phases, i.e. the ladle furnace slag after calcination comprises an amount of calcium aluminate compared to the non-calcinated ladle furnace slag that is increased by preferably at least 5 wt%.

According to a preferred embodiment, that process comprises the additional step of milling the ladle furnace slag into a powder with a particle size distribution d_50 smaller than 63 µm before or after said calcination step but prior to the combination with the retarder and the CaSO₄-scource.

Moreover, the ladle furnace slag before calcination preferably comprises less than 70 wt% of amorphous material.

Examples of the chemical composition of residues before calcination are shown in Table 1. The values of the chemical composition are determined by X-ray fluorescence (XRF).

The degree of weathering of the residue can influence the effectiveness of the inorganic binder composition. The amount of water and CO₂ which are absorbed by the residue can be quantified by determining the loss-on-ignition at 950°C, which provides a measure for the degree of weathering.

It is preferred a residue with a loss-on-ignition (LOI) value higher than 1 wt%, preferably at least 3 wt%, more preferably at least 5 wt%, and even more preferably at least 7 wt%. Examples of the loss-on-ignition values are shown in Table 2.

It should be pointed out that LOI is preferably executed on a de-metallized residue as metallic particles present in the industrial residue can oxidize while heating and impact the net-value of the LOI. Metallic particles are, for examples, Fe-rich alloys present in the residue.

Caution should be taken with the LOI value as metallic particles can be present in the industrial residue. These metallic particles can oxidize while heating and impact the net-value of the LOI. The LOI is preferably executed on a de-metallized residue meaning that no longer metallic phases such as Fe-rich alloys are present in the residue. For clarity, the reference to LOI-values in the description of the invention are based on de-metallized residues in order to avoid that an oxidation step would reverse the value. The maximal metallic content in the ladle slag is preferably less than 5 wt%, more preferably less than 3 wt%, even more preferably less than 1 wt%.

Preferably, in terms of mineralogic composition, the ladle slag comprises less than 70% of amorphous content, more preferably less than 60 wt%, even more preferably less than 50 wt%, more preferably less than 40 wt%, still more preferably less than 30 wt%.

It should be noted that the interest is towards the crystalline phases. Therefore, it is preferred that the amount of glassy and amorphous material is limited. The mineralogic constituents are determined by X-ray diffraction and quantified via the Rietveld refinement method.

Preferably, in terms of mineralogic composition, the sum of dicalcium-silicate phases (C2S-polymorphs) in the ladle slag is more than 5 wt% of more, preferably more than 15 wt%, and less than 35 wt%, more preferably less than 25 wt%.

Before calcination, the ladle furnace slag comprises at least one of the following CaO-Al₂O₃ mineralogic phases: C3A: 3CaO.Al₂O₃, C12A7: 12CaO.7Al₂O₃, CA: CaO.Al₂O₃, CA2: CaO.2Al₂O₃, CA6: CaO.6Al₂O₃.

Preferably, in terms of mineralogic composition, the sum of CaO-Al₂O₃ phases (3CaO.Al₂O₃, CaO.Al₂O₃, 12CaO.7Al₂O₃, CaO.2Al₂O₃, CaO.6 Al₂O₃) is more than 5 wt%, more preferably more than 15 wt%.

Preferably, in terms of mineralogic composition, the hydrate CaO-Al₂O₃-containing phases (such as garnet i.e. katoite) is more than 5 wt%, more preferably more than 15 wt%.

Some examples of mineral composition are shown in Table 3.

Preferably, the ladle furnace slag is milled into a powder with a particle size distribution d_50 smaller than 63 µm. More preferably, the residue is milled into a powder with a particle size distribution d_50 smaller than 25 µm, more preferably d_50 is smaller than 15 µm. The milling process can be carried out before or after the calcination and prior to said combination with the CaSO₄-scource and the retarder. More preferably, the milling process is carried out before the calcination and prior to said combination with the CaSO₄-scource and the retarder.

The fineness of the milled ladle slag as delivered to the heat-treatment step strongly depends on the process it originates from.

In the following paragraphs of the description the heat treatment process according to the present invention will be illustrated.

As mentioned before, the ladle furnace slag is calcinated by means of heat treatment. The temperature at which the heat treatment is performed depends on which type of hydrates are present in the ladle furnace slag and at which temperature they can be dehydrated and/or decarbonated.

The calcination is carried out at a temperature range between 250°C and 1000°C. Preferably, the calcination is carried out between 300°C and 900°C, more preferably between 350°C and 800°C, even more preferably between 400°C and 700°C, still more preferably between 400°C and 600°C.

Preferably, the calcination is carried out for a time range between 1 second and 10000 hours, more preferably between 60 seconds to 2 hours. This broad range is justified by the fact that the duration of the heat treatment depends on various factors, amongst others: the temperature, average particle size distribution d_50, the degree of weathering (for which the loss-on-ignition value is indicative) and the type of heating.

For example, residue with a smaller average particle size distribution require a shorter period of time to reactivate than larger particles as they have a larger surface area. On the other hand, for example, particles with a higher amount of water absorbed on the surface, indicated by a higher loss-on-ignition value, require longer periods of time of the treatment when performed at the same temperature.

Additionally, concerning the type of heating, there is broad range of techniques to generate the required temperature for the treatment such as: electric heating, inductive heating, microwave heating, combustive heating, infrared heating, friction heating, and flash heating. Some heating systems require a fine particle size as input, such as flash heating, but it results in very short dwell times. Conventional heating, based on convection and radiation, is more robust in terms of material feed but requires longer dwell times.

Table 4 provides a general indication of the two groups of heating systems.

The ladle furnace slag after the heat-treatment contains at least one of the following mineralogic phases: C3A (3CaO.Al₂O₃), C12A7 (12CaO.7Al₂O₃), CA(CaO.Al₂O₃), CA2 (CaO.2Al₂O₃) and CA6 (CaO.6Al₂O₃). Preferably, the sum of the CA-phases is at least 5 wt%, more preferably more than 10 wt%, more preferably more than 15 wt%. More preferably the residue contains also the mineralogic phase C12A7, preferably at least 5 wt%, more preferably more than 10 wt%, more preferably more than 15 wt%.

Moreover, the ladle furnace slag after calcination preferably comprises an amount of calcium aluminate phases that is increased by at least 5 wt% relative to the non-calcinated ladle furnace slag.

The purity of the minerals depends on the type of waste.

To a certain extent, other trivalent elements can be present at the site of Al(III) in these minerals such as Fe(III) (Ferric iron) to form solid solutions. Similarly, the sites of Ca can be occupied with bivalent ions such as Mg or Fe(II) (Ferrous iron).

Table 5 shows the mineralogy of the residue after calcination.

Preferably, after the calcination, the ladle furnace slag can contain some hydraulic phases such as calcium silicates (C3S, C2S, CS and their polymorphs), calcium-aluminoferrite (C4AF), MgO or CaO. These hydraulic phases are relevant for the stabilization of the binder composition.

The effect of the heat treatment is also a reduced loss-on-ignition value. The effectiveness of the heat-treatment can be expressed as difference in loss-ignition-value before and after the heat-treatment. A minimal difference of LOI values before and after the heat treatment of 0.5% is targeted. Preferably, the minimal difference of 1.0% is targeted, more preferably of 1.5%, even more preferably at least 2.5 wt%, still more preferably at least 4.5 wt%, and most preferably at least 6.5 wt%.

Table 6 shows an example of the loss-on-ignition value after calcination.

The following part of the description is related to the description of binders within an inorganic binder composition according to the present invention. The main aim of the treatment is to improve the reactivity of the ladle furnace slag in a binder composition. Of particular interest is the enhanced strength development in the first hours after mixing with water.

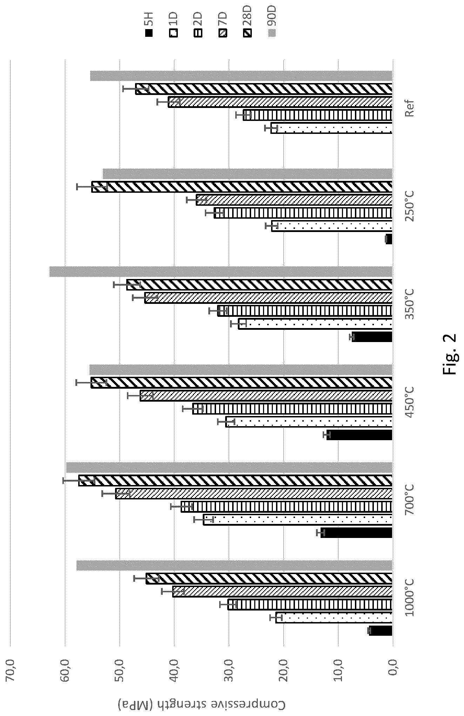

The heat-treatment has a clear effect on the early strength of the binder. Figure 2 shows compressive strength values as a function of time for binders based on the heat treatment of ladle furnace slag 1. The chemical composition of the ladle furnace slag is disclosed in Table 1. The composition of the binder is included in Table 7. The compressive strength of the binder is measured on a mortar bar which follows the procedure similar to the EN 196-1 specified. The effect of the heat treatment at the early strength (5 hours) is clearly noticed. Where the non-calcinated reference ('Ref') has no early strength, the heat-treated sample already develops a compressive strength at an early stage.

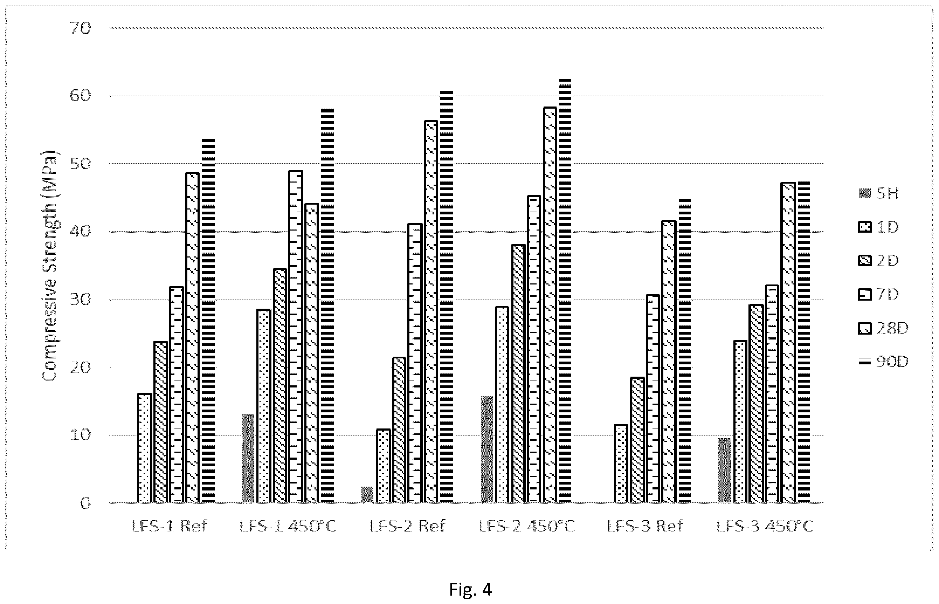

Figure 4 shows compressive strength values of binders based on different heat treated of ladle furnace slags ('LFS') 1-3, disclosed in Tables 1-6. The temperature indicates the temperature during the 2-hour heat treatment. The 'Ref' is the LFS without treatment. The '5h' refers to 5 hours after mixing, the 'D' refers to days after mixing. The effect of heat treatment is clearly seen at an early age. The composition of the binder is given in Table 8.

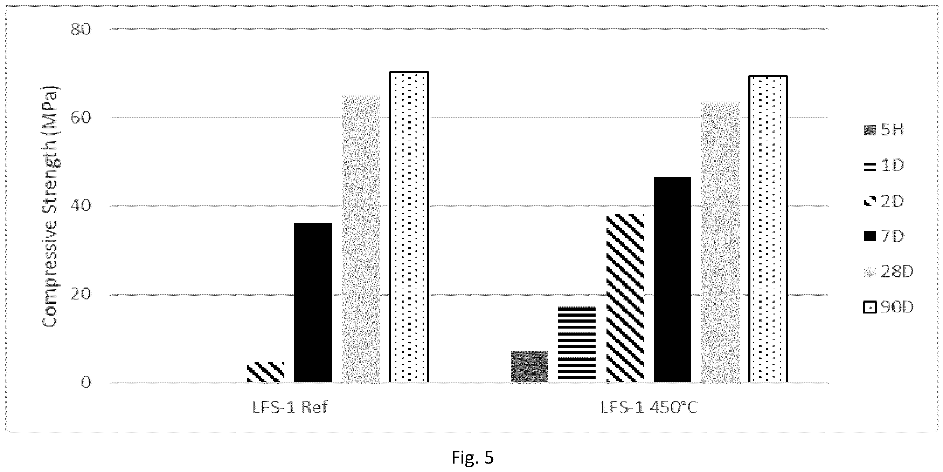

Figure 5 shows compressive strength values for the binders based on the heat treated of the ladle furnace slag 1. The temperature indicates the temperature during the 2-hour heat treatment. The 'Ref' is the ladle furnace slag without treatment. The '5h' refers to 5 hours after mixing, the 'D' refers to days after mixing. The effect of heat treatment is clearly seen at an early age. The composition of the binder is given in Table 9.

One other beneficial effect of the heat-treated residue is that the residue as binder constituent after the heat treatment can be coarser compared to a non-heat-treated particle in order to obtain a similar degree of early reactivity.

The particle size distribution d_50 will not alter the nature of the recovery process.

The calcinated ladle furnace slag, as mentioned before in the description, is combined with the CaSO₄-source. Preferably, the CaSO₄-source comprises one or more of the following:
- CaSO₄ (anhydrite),
- α-CaSO₄•½H₂O (a-hemihydrate),
- β-CaSO₄•H₂O (β-hemihydrate),
- CaSO₄•2H₂O (gypsum)
- phosphogypsum,
- SOs-scrubber gypsum.

The CaSO₄-source is combined with the calcinated ladle furnace slag to form a binding composition. Such binding composition is stable. The combination of a CA-phase and CaSO₄ results in the formation of an ettringite-based binding composition.

Moreover, the heat treatment can be applied to a blend of the residue with the CaSO₄-source. This would allow in parallel the dehydration of certain CaSO₄-hydrates to a more favorable from i.e. from gypsum to anhydrite. This co-calcination of CA-residue and CaSO₄-form offers the possibility to more effectively treat a combination of secondary resources.

As mentioned before in the description, the reactivated ladle slag is combined with a retarder. Preferably, the reactivated slag is combined with the retarder after the reactivated ladle slag has already been combined with the CaSO₄-source.

The calcinated ladle furnace slag is at least 25 wt% of the binder composition being the sum of calcinated ladle furnace slag, a retarder and a CaSO₄-scource. More preferably, the calcinated ladle furnace slag is at least 35 wt% of the binder composition, even more preferably the calcinated ladle furnace slag is 50 wt% of the binder composition.

Said retarder comprises one or more of the following: boron-containing salt, a carboxylic acid or a salt thereof, a sugar or a salt thereof, a lignin-derivate, alkali-carbonates, phosphatesor phosphonates. Preferably, the boron-containing salt is Borax. More preferably, the salt based on the carboxylic acid is based on citric acid, tartaric acid or gluconic acid. Still preferably, the lignin-derivate is lignosulfonate. Still preferably, the alkali carbonate is Na₂CO₃. The ratio between said calcinated residue and said retarder is in a range from 200:1 to 10000:1, preferably from 50:1 to 5000:1, more preferably from 100:1 to 3000:1, still more preferably from 200:1 to 2000:1.

According to an embodiment, the binder is produced without ordinary Portland cement (OPC). This allows a binder without the presence of OPC.

Preferably, the composition comprises the milled ladle furnace slag, said activator and/or said retarder and an accelerator. Still preferably, the accelerator comprises a lithium-salt and/or an alginate. Advantageously, the accelerator accelerates the setting time.

Preferably, conserving additives can be blended in the binding compound so as to avoid loss of reactivity during storage. The addition of conserving additives can be implemented prior to the milling of the residue or after milling. Conserving additives such as adipic acid or its salts are preferred.

Preferably, the composition additionally comprises one or more of the following: metallurgical residues, non-ferrous metal slag, blast furnace slag, steel slag, non-calcinated ladle slag, clays or calcined clays, glass (beads or powder), fillers such as milled limestone, quartz or dolomite.

As mentioned above, a process for producing the binder composition of the invention is provided, comprising the steps of providing a ladle furnace slag having a loss-on-ignition value of at least 1 wt%, preferably at least 3 wt%, more preferably at least 5 wt%, and even more preferably at least 7 wt%, calcinating the ladle furnace slag by heating it to a temperature between 250°C and 1000°C until the loss-on-ignition value is reduced by least 0.5 wt%, preferably at least 2.5 wt%, more preferably at least 4.5 wt%, and even more preferably at least 6.5 wt% combining and homogeneously mixing (as explained above) the calcinated ladle furnace slag with a retarder and a CaSO₄-scource to form the inorganic binder composition.

As mentioned above, according to a third aspect the present invention provides for the use of the inorganic binder composition of the invention, comprising combining the binder composition with water and optionally aggregates to form a building product.

This use comprises combining the inorganic binder composition with aggregate and water to form a building product. In more detail, the binding composition as obtained is combined with water. Preferably, the fluid obtained by this combination can be cast into a durable body. The amount of water needed depends on the desired strength class, as commonly known for conventional cement applications. More preferably, the water to binder composition ratio can be varied, without limitation, between 0.1 and 5, more preferably between 0.2 and 1. Additionally, in order to enhance the flow of the obtained fluid, conventional flow improvers, such as plasticizers or superplasticizers, can be used.

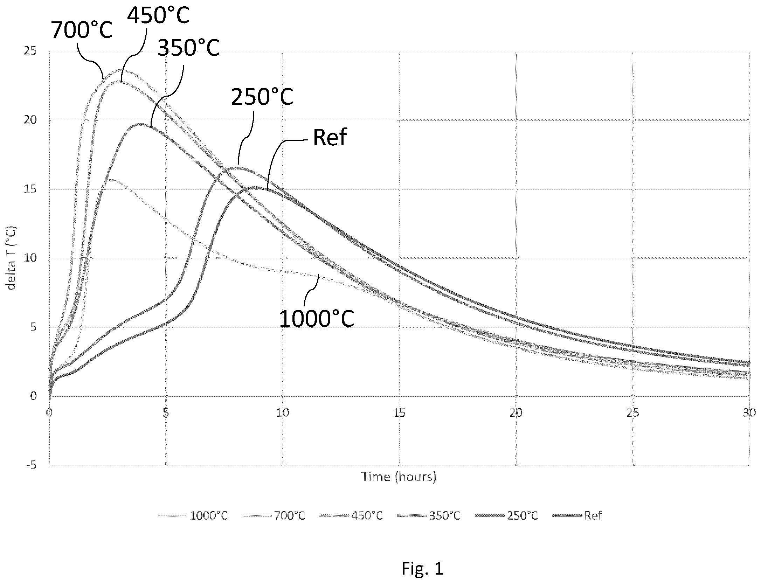

Additionally, the reaction of the inorganic binder composition with water is exothermal. This can be seen from the semi-adiabatic calorimetry (F-Cal Semi-adiabatic Calorimeter - Calmetrix) of Figure 1. Figure 1 shows a time-temperature diagram, which illustrates the effects of heat treating the residue at different temperatures. The data are generated via a semi-adiabatic calorimeter. Figure 1 shows an improved reactivity of the ladle furnace slag 1, whose composition is shown in Table 1. Figure 1 shows heat difference generated by the ladle furnace slag 1 at various calcination temperatures. The temperatures indicated in Figure 1 refer the temperature during the 2-hour heat treatment. A large heat increase can be seen when the heat treatment is performed in the range from 250°C to 450°C. This also shows that the calcinated ladle furnace slag is different from the known non-calcinated slag not only in terms of loss-on-ignition but also in terms of hydraulic reactivity.

The heat-treatment increases the degree of the exothermic reaction which provides a more robust building product, ideal for applications in colder weather. Certain applications, such as screeds, suffer from slow hardening when exposed to the low temperatures, which result in a slower construction speed but can also cause problems in terms of detrimental thaumasite formation in a sulphate rich environment.

The inorganic binder composition will assist in the prevention of the phenomenon and enhance the construction speed at lower temperatures.

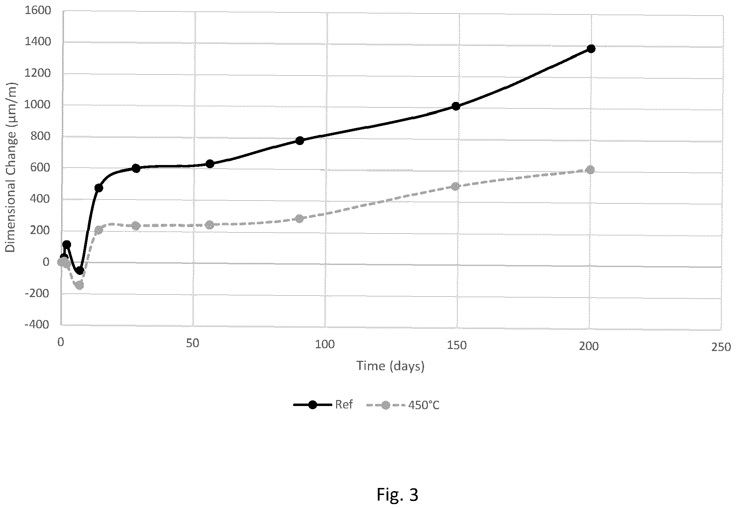

Moreover, the dimensional stability when submerging the inorganic binder composition in water is improved. Referring to Figure 3, the dotted line represents the expansion under water of the inorganic binder composition heat-treated at 450°C with the composition presented in Table 7, while the solid line represents the expansion under water of a reference ladle slag. Advantageously, expansion of the heat-treated binder is strongly reduced.

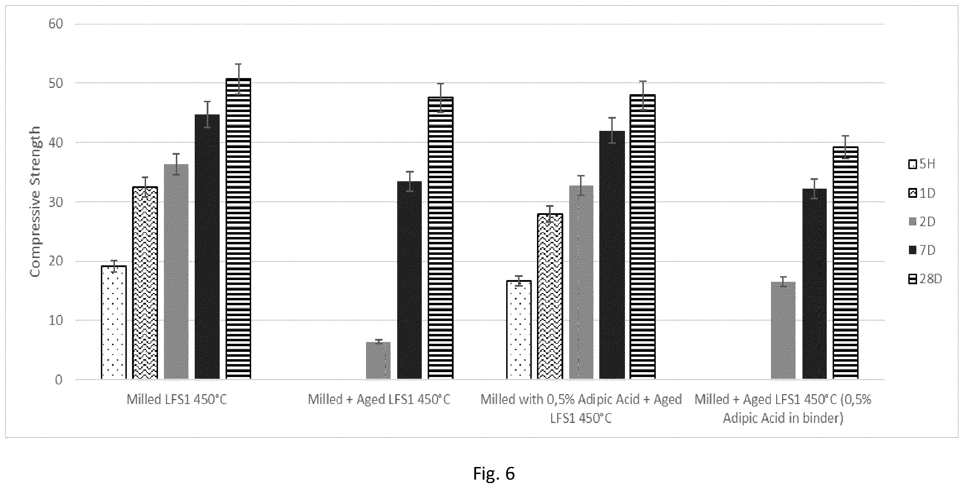

Figure 6 demonstrates the effect of the addition of a conserving additive during milling in terms of compressive strength development. The compositions for these examples are given in Table 11. The addition of adipic acid in the milling stage strongly prevents the loss in early strength due to natural ageing of the milled powder. The conserving additive needs to be added during the milling process in order to observe this improvement. In case the conserving additive is added afterwards, the early reactivity is not maintained to the same extent.

### EXPERIMENTAL RESULTS

**Table 1 - chemical composition of the residue before calcination excluding LOI.**

| **Compound** | **Ladle furnace slag 1 (wt%)** | **Ladle furnace slag 2 (wt%)** | **Ladle furnace slag 3 (wt%)** |
|---|---|---|---|
| CaO | 43.2 | 39.4 | 28.5 |
| Al₂O₃ | 24.4 | 34.8 | 66.7 |
| SiO₂ | 8.9 | 7.3 | 0.9 |
| MgO | 6.7 | 4.9 | 1.5 |
| Fe₂O₃ | 10.3 | 6.8 | 1.0 |
| MnO | 26 | 5.1 | 0.2 |
| TiO₂ | 0.5 | 0.6 | 0.1 |
| V₂O₃ | 0.3 | 0.2 | 0.1 |
| Others | 2.8 | 0.9 | 1.0 |

**Table 2 - loss-on-ignition of the residue before calcination.**

| | **Ladle furnace slag 1 (wt%)** | **Ladle furnace slag 2 (wt%)** | **Ladle furnace slag 3 (wt%)** |
|---|---|---|---|
| Loss-on-ignition | 7.8 | 3.2 | 4.8 |

**Table 3 - mineralogic composition of the residue before calcination.**

| **Mineral** | **Ladle furnace slag 1 (wt%)** | **Ladle furnace slag 2 (wt%)** | **Ladle furnace slag 3 (wt%)** |
|---|---|---|---|
| Quartz (SiO2) | 5 | 2 | |
| Di-calcium silicate (C2S) | 26 | 4.4 | 2.8 |
| Garnet (X3Z2(SiO4)3) | 24 | 13.2 | 6.5 |
| Melilite group ((Ca,Na)₂(Al,Mg,Fe²⁺)(Si,Al)₂O₇) | 6 | 4.5 | |
| Calcite (CaCO3) | 2 | | |
| Periclase (MgO) | 7 | | |
| Mayenite (Ca₁₂Al₁₄O₃₃ - C12A7) | 13 | 23.2 | |
| Srebrodolskite (Ca₂Fe³⁺₂O₅) | 7 | 5.6 | |
| Wuestite (FeO) | 6 | 12 | |
| CaAl₂O₄ | | | 15.6 |
| CaAl₄O₇ | | | 44.2 |
| Magnetite (Fe₃O₄) | | 5.9 | |
| C3AH6 (Ca₃Al₂(OH)₁₂) | | | 25.7 |
| Amorphous | | 27.5 | 2.5 |
| Others | 4 | 1.7 | 2.7 |

**Table 4 - comparison of two groups of heating systems to treat the same material.**

| **Residue** | **Ladle furnace slag 1 (wt%)** | **Ladle furnace slag 1 (wt%)** |
|---|---|---|
| Heating type | Flash and combustive Calcination | Electric /Inductive/friction/infrared/microwave |
| Loss-on-ignition before calcination (wt%) | 7.8 | 7.8 |
| d_50 (µm) | 11.2 µm | 44.5 µm |
| Peak Temperature (°C) | 650°C | 350°C |
| Loss-on-ignition after calcination (wt%) | 4.5% | 5.8% |
| Residence time range at peak temperature | Seconds | Minutes to hours |

**Table 5 - mineralogic composition of the residue after calcination at 450°C for 2h in a conventional furnace.**

| **Mineral** | **Ladle furnace slag 1 (wt%)** | **Ladle furnace slag 2 (wt%)** | **Ladle furnace slag 3 (wt%)** |
|---|---|---|---|
| Quartz (SiO₂) | 6 | 3 | |
| Di-calcium silicate (C2S) | 30 | 5.5 | 2.8 |
| Melilite group ((Ca,Na)₂(Al,Mg,Fe²⁺)(Si,Al)₂O₇) | 6 | 6 | 6.5 |
| Calcite (CaCO₃) | 2 | | |
| Periclase (MgO) | 7 | | |
| Mayenite (Ca₁₂Al₁₄O₃₃ - C12A7) | 25 | 31.2 | |
| Srebrodolskite ( Ca₂Fe³⁺2O₅) | 8 | 8 | |
| Wuestite (FeO) | 7 | 11.8 | |
| CaAl₂O₄ | | | 29.6 |
| CaAl₄O₇ | | | 47.2 |
| Magnetite (Fe₃O₄) | | 6.8 | |
| C3AH6 (Ca₃Al₂(OH)₁₂) | | | 9.4 |
| Amorphous | | 24.8 | 1.8 |
| Others | 5 | 2.9 | 2.7 |

**Table 6 - loss-on-ignition values after 2h at 450°C in a conventional furnace.**

| | **Ladle furnace slag 1 (wt%)** | **Ladle furnace slag 2 (wt%)** | **Ladle furnace slag 3 (wt%)** |
|---|---|---|---|
| Loss-on-ignition | 4.6 | 2.1 | 1.8 |

**Table 7 - Binder composition used for the semi-adiabatic calorimetry data and for the compressive strength data in Figure 1 and Figure 2 respectively based on the heat-treatment of Ladle furnace slag 1.**

| **Compound** | **Mass (g)** |
|---|---|
| Ladle furnace slag 1 | 700 |
| Tartaric Acid | 5 |
| Sodium D-gluconate | 5 |
| Anhydrite | 150 |
| alfa - Hemi-hydrate | 150 |
| Sand | 3000 |
| Water | 450 |

**Table 8 - Compositions used for the compressive strength data in Figure 4.**

| | **Ladle furnace slag 1** | **Ladle furnace slag 2** | **Ladle furnace slag 3** |
|---|---|---|---|
| Ladle furnace slag | 750 | 750 | 750 |
| Citric Acid | 15 | 7.5 | 10 |
| Borax | 10 | 5 | 10 |
| alfa - Hemi-hydrate | 250 | 150 | 150 |
| Sand | 3000 | 3000 | 3000 |
| Water | 450 | 450 | 450 |

**Table 9 - Compositions used for the compressive strength data in Figure 5.**

| **Compound** | **Mass (g)** |
|---|---|
| Ladle furnace slag 1 | 500 |
| EDTMP (ethylenediamine tetra(methylene phosphonic acid)) | 5 |
| Tartaric Acid | 2 |
| Limestone flour | 250 |
| Gypsum | 250 |
| Sand | 3000 |
| Super plasticizer | 1 |
| Water | 350 |

**Table 10: Evolution of delta LOI as function of the temperature of heat-treatment for CA- rich residue 1.**

| **T(°C)** | **t(min)** | **LOI** | **delta LOI** |
|---|---|---|---|
| 105 | | 7.80% | 0.00% |
| 150 | 480 | 7.69% | -0.11% |
| 250 | 120 | 6.56% | -1.24% |
| 350 | 120 | 5.04% | -2.76% |
| 450 | 120 | 4.60% | -3.20% |
| 700 | 120 | 1.38% | -6.42% |
| 950 | 120 | 0.00% | -7.80% |

**Table 11: Composition of binder used for the validation of the conserving additive (Figure 6).**

| | **Samples 1&3** | **Sample 2** | **Sample 4 with 0.5% adipic acid (added after milling)** |
|---|---|---|---|
| Ladle furnace slag 1 heat treated at 450°C for 2 hours | 700 | | 700 |
| Ladle furnace slag 1 heat treated at 450°C for 2 hours milled with adipic acid | | 700 | |
| Citric Acid | 10 | 10 | 10 |
| Gypsum | 300 | 300 | 300 |
| Sand | 3000 | 3000 | 3000 |
| Water | 450 | 450 | 450 |
| Adipic Acid | | | 3.5 |

## Claims

1. An inorganic binder composition, comprising:
- calcinated ladle furnace slag,
- a retarder, and
- a CaSO₄-scource,
wherein a ladle furnace slag, having a loss-on-ignition value of at least 1 wt%, preferably at least 3 wt%, more preferably at least 5 wt%, and even more preferably at least 7 wt%, was calcinated by heating it to a temperature between 250°C and 1000°C until the loss-on-ignition value was reduced by at least 0.5 wt%, preferably at least 2.5 wt%, more preferably at least 4.5 wt%, and even more preferably at least 6.5 wt%.

2. The inorganic binder composition according to claim 1, wherein the retarder is selected from one or more of the following: a boron-containing salt, a carboxylic acid, a salt thereof, a sugar, a lignin sulfonate, an alkali carbonate, a phosphonate, a phosphate, and preferably from tartaric acid, citric acid, gluconic acid and salts thereof.

3. The inorganic binder composition according to claim 1 or 2, wherein the CaSO₄-source is selected from one or more of the following: CaSO₄ (anhydrite), α-CaSO₄•½H₂O (αhemihydrate), β-CaSO₄•½H₂O (β-hemihydrate), CaSO₄•2H₂O (gypsum), phosphogypsum, and SOa-scrubber gypsum.

4. The inorganic binder composition according to any one of claims 1 to 3, wherein the ratio between the calcinated ladle furnace slag and the CaSO₄-scource is in the range from 19:1 to 1:3 and/or the ratio between the sum of the calcinated ladle furnace slag plus the CaSO₄-source, and the retarder is larger than 19:1.

5. The inorganic binder composition according to any one of claims 1 to 4, wherein the inorganic binder composition is the sum of the calcinated ladle furnace slag, the retarder and the CaSO₄-scource and wherein the calcinated ladle furnace slag is at least 25 wt% of the inorganic binder composition.

6. The inorganic binder composition according to any one of claims 1 to 5, further comprising: metallurgical residues, non-ferrous metal slag, blast furnace slag, steel slag, non-calcinated ladle slag, clays, calcinated clays, glass beads, glass powder, fillers such as ground limestone, dolomite and quartz, preferably accelerators such as lithium-salts and alginates, and also preferably conserving additives such as adipic acid.

7. A process for producing the inorganic binder composition according to any one of the preceding claims, comprising the steps of:
- providing a ladle furnace slag having a loss-on-ignition value of at least 1 wt%, preferably at least 3 wt%, more preferably at least 5 wt%, and even more preferably at least 7 wt%,
- calcinating the ladle furnace slag by heating it to a temperature between 250°C and 1000°C until the loss-on-ignition value is reduced by least 0.5 wt%, preferably at least 2.5 wt%, more preferably at least 4.5 wt%, and even more preferably at least 6.5 wt%,
- combining and homogeneously mixing the calcinated ladle furnace slag with a retarder and a CaSO₄-scource to form the inorganic binder composition.

8. The process according to claim 7, wherein the ladle furnace slag comprises at least one of the following mineral phases: 3CaO•Al₂O₃ (C3A), 12CaO•7Al₂O₃ (C12A7), CaO•Al₂O₃ (CA), CaO•2Al₂O₃ (CA2), CaO•6Al₂O₃ (CA6).

9. The process according to claim 7 or 8, wherein the ladle furnace slag comprises at least 25 wt% of CaO, at least 10 wt% of Al₂O₃, and a maximum of 25 wt% of SiO₂.

10. The process according to any one of claims 7 to 9, wherein the weight ratio of Al₂O₃/CaO in the ladle furnace slag is at least 0.25.

11. The process according to any one of claims 7 to 10, wherein the ladle furnace slag after calcination comprises an amount of calcium aluminate phases compared to the non-calcinated ladle furnace slag that is increased by at least 5 wt%.

12. The process according to any one of claims 7 to 11, comprising the additional step of milling the ladle furnace slag into a powder with a particle size distribution d_50 smaller than 63 µm before or after said calcination step but prior to the combination with the retarder and the CaSO₄-scource.

13. The process according to any one of claims 7 to 12, wherein the ladle furnace slag before calcination comprises less than 70 wt% of amorphous material.

14. Use of the inorganic binder composition according to any one of claims 1 to 6, comprising combining the binder composition with water and optionally aggregates to form a building product.
